# EUROPÄISCHE PATENTANMELDUNG

(11) **EP 1 432 098 A1**
(43) Veröffentlichungstag der Anmeldung: **23.06.2004**
(21) Anmeldenummer: 03027535.8
(22) Anmeldetag: 29.11.2003
(51) Int. Cl.: H02J 13/00, H01H 9/16

(54) **Vorrichtung, System und Verfahren zur Schaltstellungssignalisierung eines Schaltgerätes**

(30) Priorität: 17.12.2002 DE 10258919
(71) Anmelder: ABB PATENT GmbH, 68526 Ladenburg (DE)
(72) Erfinder: Habedank, Winrich, Dr.-Ing., 69181 Leimen (DE); Kahl, Walter, Dipl.-Ing., 69190 Walldorf (DE)
(74) Vertreter: Miller, Toivo

(57) **Zusammenfassung**

Es wird eine Vorrichtung zur Schaltstellungssignalisierung eines Schaltgerätes beschrieben, die ein an das Schaltgerät ansetzbares und mit diesem über eine Kupplungsvorrichtung vebundenes Zusatzgerät umfasst, welches einen oder mehrere funkauslesbare Transponder und eine Antenne aufweist, so daß dadurch Informationen von den Transpondern aus dem Inneren des Zusatzgerätes von einem Ort außerhalb des Zusatzgerätes aus drahtlos abfragbar sind. Die Antenne ist mit dem oder den Transponder(n) durch einen Strompfad verbunden, und der Strompfad ist an wenigstens einer Kontaktstelle durch das Schaltschloss unterbrechbar. Mit einer solchen erfindungsgemäßen Vorrichtung ist die drahtlose Abfrage von Informationen die Schaltstellung betreffend von außerhalb des Schaltgerätes ermöglicht, indem die Schaltstellung durch das Vorhandensein oder Nicht-Vorhandensein eines Transponder-Signals von außen drahtlos erkennbar und abfragbar ist.

## Beschreibung

Die Erfindung betrifft eine Vorrichtung, ein System und ein Verfahren zur Schaltstellungssignalisierung eines Schaltgerätes, insbesondere eines Installations-Schaltgerätes.

Installations-Schaltgeräte dienen in elektrischen Installationsanlagen dem Leitungsund/oder Personen- und Sachschutz. Beispielsweise unterbrechen die sogenannten Leitungsschutzschalter (LS) den Stromfluss durch die überwachte Leitung bei Auftreten eines Überstromes oder eines Kurzschlussstromes. Sie umfassen dazu elektromagnetische und thermische Auslöser sowie ein oder mehrere Schaltschlösser, die bei Auslösung durch einen der Auslöser den Strompfad zwischen Eingangs- und Ausgangsklemmen unterbrechen. Andere üblicherweise verwendete Schaltgeräte sind Fehlerstromschutzschalter, Motorschutzschalter, Schütze oder Relais.

Der jeweilige Schaltzustand eines solchen Installationsschaltgerätes, d.h., ob der Strompfad geschlossen oder unterbrochen ist, ist bei solchen Geräten in der Regel nur von außen durch Betrachtung der Stellung des Schalthebels festzustellen, die Geräte selbst sehen jedoch keine automatische Schaltzustandssignalisierung vor.

In Installationssystemen ist es allerdings wünschenswert, Informationen über den jeweiligen Schaltzustand der Schaltgeräte in Form von elektrischen Signalen zur Weiterverarbeitung in Kontroll-, Anzeige- oder Automatisierungssystemen zu erhalten. Dazu sind Vorrichtungen zur Schaltstellungssignalisierung eines Schaltgerätes in Form von Zusatzgeräten, auch Hilfsschalter oder Signalkontaktschalter genannt, bekannt. Diese sind an ein elektrisches Installationsschaltgerät angesetzt, besitzen Anschlussklemmen für Zu- und Abgangsleiter und dazwischen wenigstens einen Schalter. Über spezielle Kupplungseinrichtungen wird ein im Zusatzgerät angeordnetes Schaltschloss angesteuert, wodurch das bewegliche Kontaktstück zwischen seinen beiden Endstellungen hin- und herbewegt wird. Mit einem solchen Zusatzgerät wird ein Hilfs- oder Signalstromkreis geschaltet, der dann zur elektrischen Signalübermittlung an eine übergeordnete Kontroll-, Anzeige- oder Automatisierungseinrichtung dienen kann. Beispiel für einen solchen Hilfsschalter ist der Hilfsschalter S2-S/H, der von der Firma ABB Stotz-Kontakt GmbH, Heidelberg, hergestellt und vertrieben wird und in dem Katalog "Niederspannungsmaterial" aus dem Jahr 2002 der Firma ABB Stotz-Kontakt/Striebel&John Vertriebsgesellschaft mbH auf S. 2/64 beschrieben ist.

Die bekannten Vorrichtungen zur Schaltstellungssignalisierung müssen allesamt mittels Signaldrähten innerhalb des Installationssystems verdrahtet werden, da die von ihnen erzeugten Signale leitungsgebunden übertragen werden. Die erforderlichen Signalleitungen, zusätzlich zu den eigentlichen Energie-Leitungen, die von dem Schaltgerät geschaltet werden sollen, erzeugen einen hohen Platzbedarf im Installationssystem, der entsprechend erhöhte Materialkosten zur Folge hat. Das Installieren der erforderlichen Signalleitungen bedeutet einen beträchtlichen Arbeits- und Zeitaufwand, was ebenfalls mit erheblichen Kosten verbunden ist.

Ausgehend von dem beschriebenen Stand der Technik ist es daher Aufgabe der vorliegenden Erfindung, eine Vorrichtung und ein System zur Schaltstellungssignalisierung zu schaffen, deren Installation stark vereinfacht und dadurch sehr kostengünstig durchführbar ist, und ein Verfahren zu deren Durchführung anzugeben.

Die Aufgabe wird bezüglich der Vorrichtung zur Schaltstellungssignalisierung erfindungsgemäß gelöst durch die kennzeichnenden Merkmale des Anspruchs 1, bezüglich des Systems zur Schaltstellungssignalisierung durch die kennzeichnenden Merkmale des Anspruchs 11 und bezüglich des Verfahrens zur Schaltstellungssignalisierung durch die kennzeichnenden Merkmale des Anspruchs 17.

Erfindungsgemäß also umfasst die Vorrichtung ein Zusatzgerät, welches wenigstens einen funkauslesbaren Transponder und wenigstens eine Antenne aufweist, so daß dadurch Informationen von dem Transponder aus dem Inneren des Zusatzgerätes von einem Ort außerhalb des Zusatzgerätes aus drahtlos abfragbar sind. Die wenigstens eine Antenne ist mit dem wenigstens einen Transponder durch wenigstens einen Strompfad verbunden, und der wenigstens eine Strompfad ist an wenigstens einer Kontaktstelle durch das Schaltschloss unterbrechbar. Mit einer solchen erfindungsgemäßen Vorrichtung ist die drahtlose Abfrage von Informationen die Schaltstellung betreffend von außerhalb des Schaltgerätes ermöglicht, es entfällt die Notwendigkeit der Verdrahtung des Zusatzgerätes. Da zur Abfrage eines Signals von dem Transponder dieser mit der Antenne im Zusatzgerät verbunden sein muss, ist eine drahtlose Signalübertragung von dem Transponder nach außen nur möglich, wenn der Strompfad zwischen dem Transponder und der Antenne geschlossen ist. Ist der Strompfad dagegen unterbrochen, so ist von außen kein Signal abfragbar. Der Strompfad ist durch das Schaltschloss unterbrechbar. Wegen der Kupplung zwischen dem Schaltschloss im Zusatzgerät und dem Schaltgerät wird in einem ersten Schaltzustand des Schaltgerätes der Strompfad zwischen Transponder und Antenne in dem Zusatzgerät durch das Schaltschloss im Zusatzgerät unterbrochen sein, in einem zweiten Schaltzustand dagegen nicht. Wird also ein Signal von dem Transponder nach außen übertragen, so befindet sich das Schaltgerät im zweiten Schaltzustand, wird kein Signal übertragen, so befindet sich das Schaltgerät im ersten Schaltzustand. Mit anderen Worten, die Schaltstellung ist durch das Vorhandensein oder Nicht-Vorhandensein eines Transponder-Signals von außen drahtlos erkennbar und abfragbar.

In einer sehr vorteilhaften weiterführenden Ausgestaltung der Erfindung weist das Zusatzgerät einen ersten und einen zweiten funkauslesbaren Transponder und eine Antenne auf, so daß dadurch Informationen von dem ersten und/oder zweiten Transponder aus dem Inneren des Zusatzgerätes von einem Ort außerhalb des Zusatzgerätes aus drahtlos abfragbar sind, die Antenne ist mit dem ersten Transponder durch einen ersten Strompfad und mit dem zweiten Transponder durch einen zweiten Strompfad verbunden, und der erste Strompfad ist an einer ersten Kontaktstelle und der zweite Strompfad an einer zweiten Kontaktstelle durch das Schaltschloss unterbrechbar. Diese Ausgestaltungsform erlaubt es, über zwei Transponder redundant Informationen über die Schaltstellung auf drahtlosem Wege aus dem Schaltgerät heraus nach außen zu übertragen, und damit die Übertragungssicherheit zu erhöhen.

In einer weiteren Ausgestaltungsmöglichkeit der Erfindung ist vorgesehen, dass in der ersten (zweiten) Schaltposition des Schaltschlosses der erste (zweite) Kontakt an der ersten (zweiten) Kontaktstelle unterbrochen und der zweite (erste) Kontakt an der zweiten (ersten) Kontaktstelle geschlossen ist. Somit ist ein Wechselschalter realisiert, der abwechselnd den ersten und den zweiten Transponder zur Übertragung der Schaltstellungsinformation heranzieht. Eine Vorrichtung in dieser Ausgestaltungsform erhöht die Abfragesicherheit weiter. Es kann nunmehr festgelegt werden, dass beispielsweise ein erster Schaltzustand des Schaltgerätes über das Vorhandensein eines Transponder-Signals von dem ersten Transponder, ein zweiter Schaltzustand des Schaltgerätes über das Vorhandensein eines Transponder-Signals von dem zweiten Transponder abfragbar ist. Durch die Anordnung als Wechselschalter ist sichergestellt, dass immer genau ein Transponder ein Signal absetzen kann. Eine mögliche Unsicherheit, ob etwa das Nicht-Vorhandensein eines Transponder-Signals einen Schaltzustand signalisiert oder durch einen Übertragungsfehler hervorgerufen ist, kann somit ausgeschlossen werden.

In einer vorteilhaften Ausgestaltung der Erfindung ist der Transponder ein aktiver Transponder, wie er im Prinzip aus anderen Technikgebieten, beispielsweise der Transport- oder Fertigungslogistik bekannt ist. Ein solcher aktiver Transponder umfasst wenigstens eine Baugruppe zur Energieerzeugung oder -versorgung und eine Baugruppe zur Signal- und/oder Datenübertragung, und kann darüber hinaus weitere Baugruppen, beispielsweise zur Speicherung von Daten in einer lesbaren Speicherbaugruppe oder eine Mikrocontrollerbaugruppe umfassen. Die Baugruppe zur Energieerzeugung kann eine Energiequelle umfassen, beispielsweise eine Batterie.

Eine sehr vorteilhafte Ausgestaltung der Erfindung sieht vor, dass der Transponder ein passiver funkauslesbarer Transponder ist, so daß die Vorrichtung keine eigene Energieversorgung für den Transponder benötigt und der Transponder seine Energie aus einem von außen eingestrahlten Abfragesignal bezieht. Insbesondere ist es dabei vorteilhaft, wenn der Transponder eine elektronische Schaltung mit wenigstens einem lesbaren Speicher zur Speicherung von Daten, mit wenigstens einer Signal- und/oder Datenübertragungsbaugruppe sowie mit wenigstens einer Baugruppe zur Energieerzeugung aus einem von außen eingestrahlten und von der Antenne empfan-Energieerzeugung aus einem von außen eingestrahlten und von der Antenne empfangenen und an den Transponder über den Strompfad weitergeleiteten elektromagnetischen Signal umfasst. Dabei kann der lesbare Speicher ein Nur-Lese-Speicher (ROM), ein Schreib/Lesespeicher (RAM) oder ein EEPROM sein.

Sehr vorteilhaft ist weiter eine mögliche Ausgestaltung, derzufolge die elektronische Schaltung einen Mikroprozessor oder einen Mikrocontroller umfasst.

Vorteilhaft ist es insbesondere, wenn die Baugruppe zur Signal- und/oder Datenübertragung eine in anderen Technikgebieten, wie z.B. der drahtlosen Kommunikatioinstechnik, bereits bekannte und erprobte Baugruppe mit einem darin verwendeten international genormten Übertragungsprotokoll, wie z.B. eine Blootooth- Baugruppe, ist.

Der Transponder kann gemäß einer alternativen Ausgestaltungsmöglichkeit aber auch ein akustisches Oberflächenwellenbauelement sein. Hinsichtlich eines Systems zur Schaltstellungssignalisierung eines Schaltgerätes oder mehrerer Schaltgeräte besteht der Kern der Erfindung darin, dass das System wenigstens ein Schaltgerät mit wenigstens einer daran angesetzten Vorrichtung wie oben beschrieben, sowie wenigstens eine Signalabfrageeinheit zur drahtlosen Abfrage der Informationen von dem oder den Transpondern aus dem wenigstens einen Zusatzgerät der Vorrichtung umfasst.

Eine vorteilhafte Ausgestaltung des Systems besteht darin, dass die Signalabfrageeinheit eine Antenne sowie eine Sende/Empfangseinheit zur Erzeugung eines Abfragesignals und zum drahtlosen Empfang des von dem Transponder abgestrahlten Signals oder der von den Transpondern abgestrahlten Signale umfasst. Dabei besteht das Abfragesignal und das von dem Transponder abgestrahlte Signal aus hochfrequenten elektromagnetischen Wellen.

Insbesondere vorteilhaft ist eine Ausgestaltungsmöglichkeit, in der mehr als ein Transponder vorgesehen sind und die einzelnen Transponder unterscheidbar und einzeln adressierbar sind.

Vorteilhaft ist weiterhin eine Ausgestaltungsform des Systems, bei der die Signalabfrageeinheit mit einer zentralen Steuer- und Regeleinheit verbunden ist und die Signale von dem Transponder oder den Transpondern in der Steuer- und Regeleinheit weiterverarbeitet werden. Das System kann dabei als Teil eines Installationsbus-Systems vorgesehen sein, so dass das System die Informationen über die Schaltstellung des Schaltgerätes oder der Schaltgeräte dem Installationsbussystem zur weiteren Verarbeitung zur Verfügung stellt.

Hinsichtlich des Verfahrens zur Schaltstellungssignalisierung eines Schaltgerätes mit einem Schaltgerät und einem System wie oben beschrieben besteht der Kern der Erfindung darin, dass in einer ersten Schaltstellung des Schaltgerätes durch das Schaltschloss in dem Zusatzgerät der wenigstens eine Strompfad zwischen dem wenigstens einen Transponder und der wenigstens einen Antenne unterbrochen wird, und dass in einer zweiten Schaltstellung des Schaltgerätes durch das Schaltschloss in dem Zusatzgerät der wenigstens eine Strompfad zwischen dem wenigstens einen Transponder und der wenigstens einen Antenne geschlossen wird, so dass nur im Falle des geschlossenen Strompfades ein Signal von dem Transponder zu der Signalabfrageeinheit übertragen und dadurch die zweite Schaltstellung des Schaltgerätes angezeigt wird, und im Falle des unterbrochenen Strompfades kein Signal von dem Transponder zu der Signalabfrageeinheit übertragen und dadurch die erste Schaltstellung des Schaltgerätes angezeigt wird.

Eine besonders vorteilhafte Ausführungsform des Verfahrens sieht vor, dass in einer ersten (zweiten) Schaltstellung des Schaltgerätes durch das Schaltschloss in dem Zusatzgerät der erste (zweite) Strompfad zwischen dem ersten (zweiten) Transponder und der Antenne unterbrochen ist und der zweite (erste) Strompfad zwischen dem zweiten (ersten) Transponder und der Antenne geschlossen ist, so dass in der ersten (zweiten) Schaltstellung des Schaltgerätes ein Signal von dem zweiten (ersten) Transponder zu der Signalabfrageeinheit übertragen wird, nicht aber von dem ersten (zweiten) Transponder, und dadurch die erste (zweite) Schaltstellung des Schaltgerätes angezeigt wird. Bei mehr als einem Transponder können dabei die verschiedenen Transponder von der Signalabfrageeinheit unterschieden werden und/oder verschiedene Transponder von der Signalabfrageeinheit unterschiedlich adressiert werden.

Insbesondere ist auch eine Ausführungsform vorteilhaft, bei der die Informationen über die Schaltstellung des Schaltgerätes oder der Schaltgeräte von der Signalabfrageeinheit an eine zentrale Steuer- und Regeleinheit weitergeleitet werden, so dass die Informationen zu weiteren Kontroll- und/oder Weiterverarbeitungszwecken genutzt werden können. Dabei können die Informationen über die Schaltstellung des Schaltgerätes oder der Schaltgeräte von der Signalabfrageeinheit an ein übergeordnetes Installationsbussystem weitergeleitet werden, so dass die Informationen über das Bussystem zu weiteren Kontroll- und/oder Weiterverarbeitungszwecken genutzt werden können.

Weitere vorteilhafte Ausgestaltungen und Verbesserungen der Erfindung sind den weiteren Unteransprüchen zu entnehmen.

Anhand der Zeichnungen, in denen drei Ausführungsbeispiele der Erfindung dargestellt sind, sollen die Erfindung sowie weitere vorteilhafte Ausgestaltungen und Verbesserungen der Erfindung und weitere Vorteile näher erläutert und beschrieben werden.

Es zeigen:
- Fig. 1: ein erfindungsgemäßes Zusatzgerät,
- Fig. 2: eine erfindungsgemäßes System und
- Fig. 3: eine weitere Ausführungsform eines erfindungsgemäßen Systems

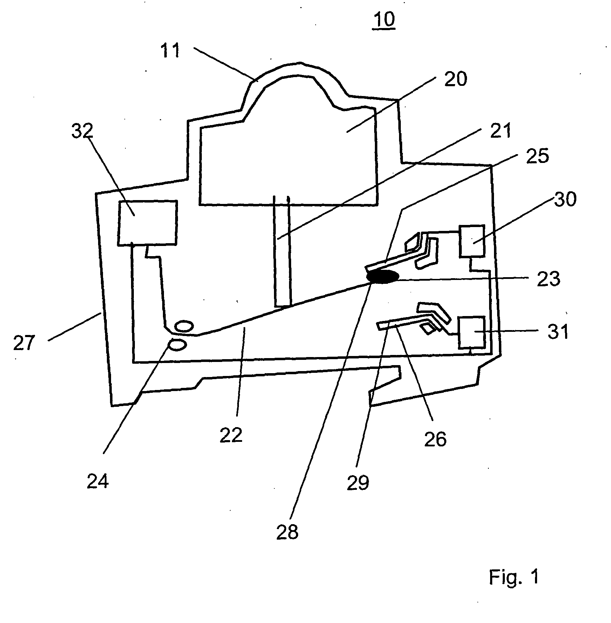

In einem Zusatzgerät 10 gemäß Fig. 1 sind, angeordnet in einem Isolierstoffgehäuse 11, dessen Außenkontur der Außenkontur eines Schaltgerätes angeglichen ist und von dem in der Fig. 1 eine Halbschale in der schematischen Einsicht dargestellt ist, ein Schaltschloss 20 mit einem Betätigungshebel 21 angeordnet. Das Schaltschloss steht über Kupplungselemente, die hier nicht dargestellt sind, mit dem Schaltgerät, an das das Zusatzgerät angesetzt wird, in Verbindung. In dem Zusatzgerät 10 sind weiterhin zwei Transponder 30, 31 sowie eine Antenne 32 angeordnet. Die Antenne 32 und die Transponder 30, 31 sind über einen Strompfad 27 verbunden. Ein Teil des Strompfades 27 ist durch einen in einem Lager 24 drehbeweglich geführten Kontakthebel 22 gebildet, an dessen beweglichem Ende ein bewegliches Kontaktstück 23 angebracht ist. Ein erstes festes Kontaktstück 25, verbunden mit dem Transponder 30, und ein zweites festes Kontaktstück 26, verbunden mit dem Transponder 31, schließen den Strompfad. Das erste feste Kontaktstück 25 bildet mit dem beweglichen Kontaktstück 23 eine erste Kontaktstelle 28, das zweite feste Kontaktstück 26 bildet mit dem beweglichen Kontaktstück 23 eine zweite Kontaktstelle 29. Der Betätigungshebel 21 des Schaltschlosses 20 wirkt so auf den Kontakthebel 22 ein, dass in Abhängigkeit von dem Schaltschloss 20 das bewegliche Kontaktstück 23 zwischen den beiden festen Kontaktstücken 25 und 26 hin- und hergeschaltet wird. Dadurch wird in Abhängigkeit von dem Schaltschloss 20 entweder der Strompfad über den Transponder 30 oder über den Transponder 31 geschlossen, wobei der jeweils andere Transponder dann nicht mit der Antenne verbunden ist. Es kann jeweils nur derjenige Transponder 30, 31 abgefragt werden, über dessen zugeordnetes festes Kontaktstück 25, 26 der Strompfad 27 geschlossen ist. Auf diese Art kann zuverlässig eine Fehlsignalisierung ausgeschlossen werden, da beide Transpondersignale immer komplementär zueinander sein müssen, was eine zusätzliche Plausibilitätsprüfung und Funktionskontrolle erlaubt. Ein besonderer Vorteil der Ausführungsform wie in Fig. 1 dargestellt besteht darin, dass als Isolierstoffgehäuse 11, Schaltschloss 20, Betätigungshebel 21, Lager 24, Kontakthebel 22, feste Kontaktstücke 25, 26 und bewegliches Kontaktstück 23 herkömmliche Bauteile aus der Produktfertigung der bekannten Hilfsschalter oder Signalkontaktschalter verwendet werden können, und diese auch teilweise mit den selben Fertigungseinrichtungen montiert werden können. Als Transponder werden in dem Beispiel der Fig. 1 Halbleiter-Bauelemente eingesetzt, wie sie beispielsweise für die Kennzeichnung von Waren oder in der Fertigungsautomatisierung zur Kennzeichnung von Einzelteilen im Produktions-Workflow Verwendung finden. Es sind dies passive Transponder, die keine eigene Energieversorgung benötigen, sondern durch ein äußeres, elektromagnetisches Abfragesignal kurzzeitig mit Energie versorgt werden, wobei die so aufgenommene Energie ausreicht, um eine Information, die in einem lesbaren Speicher in dem Transponder gespeichert ist, über die Antenne zurückzusenden.

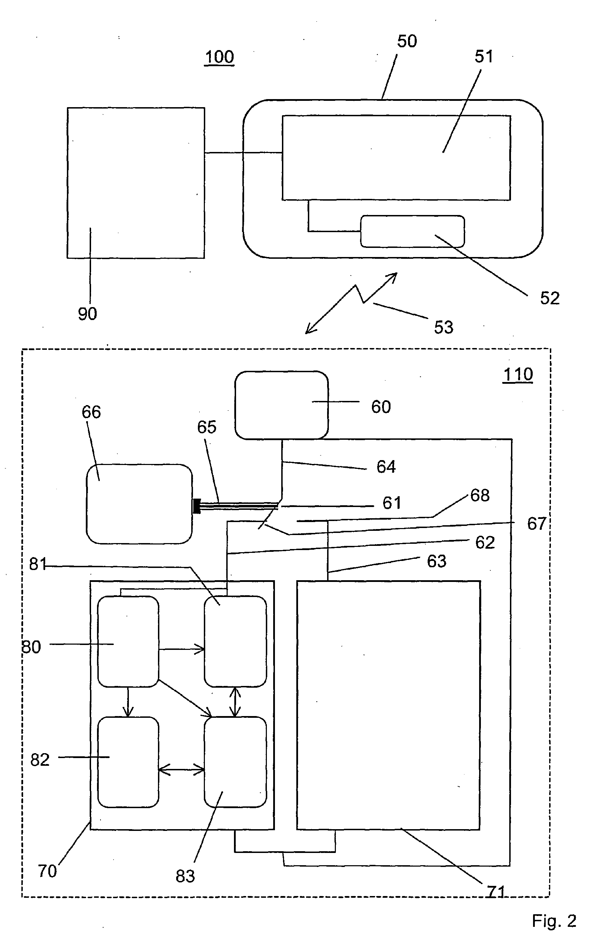

Ein solches System zur Schaltstellungssignalisierung ist schematisch in Fig. 2 dargestellt. Es besteht in dem Beispiel der Fig. 2 aus einem Zusatzgerät 110 und einer Signalabfrageeinheit 50. Die Signalabfrageeinheit 50 umfasst eine Sende/Empfangseinheit 51 sowie eine mit dieser verbundene Antenne 52. Die Signalabfrageeinheit 50 ist mit einer zentralen Steuer- und Regeleinheit 90 oder einem Bussystem verbunden. Das Zusatzgerät 110 umfasst eine Antenne 60 sowie zwei Transponder 70, 71, die mit der Antenne über einen Strompfad 64 verbunden sind. Der Strompfad 64 wird mittels eines Wechselschalters 61 über zwei Kontaktstellen 67, 68 in zwei abwechselnd zugeschaltete Teilpfade 62 und 63 aufgeteilt, wobei jeder der beiden Teilpfade 62, 63 einem der beiden Transponder 70, 71 zugeordnet ist. Der Wechselschalter 61 wird betätigt mittels eines Betätigungshebels 65, der mit einem Schaltschloss 66 in Verbindung steht und den Wechselschalter 61 in Abhängigkeit von dem Schaltschloss 66 zwischen den beiden Teilpfaden 62, 63 hin- und her schaltet. Die Transponder 70, 71 umfassen jeweils eine Baugruppe 80 zur Energieerzeugung der für die Transponder benötigten Energie aus einem von außen von der Antenne 52 der Signalabfrageeinheit 50 abgestrahlten und von der Antenne 60 empfangenen elektromagnetischen Signal, welches durch den Pfeil 53 dargestellt ist, sowie weitere Baugruppen zur Signal- und/oder Datenübertragung ( Baugruppe 81), zur Speicherung von Daten in einer lesbaren Speicherbaugruppe 83 sowie eine Mikrocontrollerbaugruppe 82. Alle Baugruppen 80, 81, 82, 83 sind elektronische Schaltungen. Sie könnten beispielsweise in Form eines ASIC gemeinsam auf einem Chip integriert sein. In der Fig. 2 sind die Baugruppen 80, 81, 82, 83 der Übersichtlichkeit halber nur in dem Transponder 70 eingezeichnet, sie sind in dem Transponder 71 jedoch identisch vorhanden.

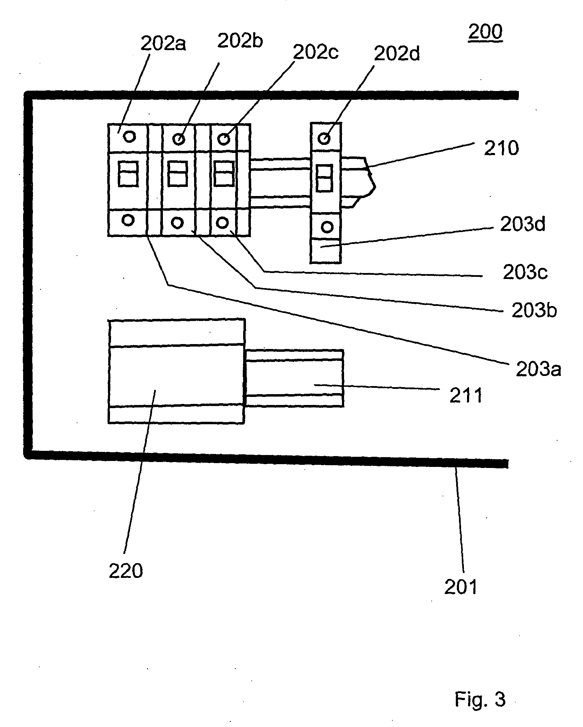

In Fig. 3 ist als konkrete Ausführungsform der Aufbau eines erfindungsgemäßen Systems 200 in einem zweireihigen Hausverteilerkasten 201 dargestellt. Der Hausverteilerkasten 201 umfasst eine im montierten Zustand oben befindliche erste Normprofilschiene 210 und eine im montierten Zustand darunter befindliche zweite Normprofilschiene 211. Auf der ersten Normprofilschiene 210 sind vier Schaltgeräte 202a, b, c, d mit den ihnen jeweils zugeordneten erfindungsgemäßen Zusatzgeräten 203 a, b, c, d angebracht. Die Zusatzgeräte 203 a, b, c sind seitlich an den Schaltgeräten 202 a, b, c angebracht, das Zusatzgerät 203 d ist eine Ausführungsform, die unterhalb an dem ihm zugeordneten Schaltgerät, hier dem Schaltgerät 202 d, angebracht wird. Auf der zweiten Normprofilschiene 211 ist eine Signalabfrageeinheit 220 angebracht, die in ihrem Inneren, hier nicht dargestellt, eine Sende/Empfangseinheit, eine Antenne und eine Buskopplereinheit zur Anbindung an einen Installationsbus wie z.B. den EIB-Bus enthält. Die Signalabfrageeinheit 220 sendet nacheinander, also in zyklischer Weise, Abfragesignale an die vier Zusatzgeräte 203 a, b, c, d und empfängt deren Antwortsignale, wobei jedes einzelne Zusatzgerät einzeln adressierbar und unterscheidbar ist. Über die Buskopplereinheit wird der aus den Antwortsignalen der Zusatzgeräte in der Signalabfrageeinheit 220 ermittelte Schaltzustand der Schaltgeräte 202 a, b, c, d dem Installationsbus übergeben zur Weiterleitung an entsprechende Steuer-, Kontroll- oder Meldeeinrichtungen.

Die oben gezeigten Ausführungsbeispiele beschreiben die Ausgestaltungsmöglichkeiten der Erfindung nicht abschließend. So sind in der Fig. 1 und 2 nur passive Transponder 70, 71, 30, 31 gezeigt. Es wäre aber ebenso denkbar, sie durch eine aktive Transpondervariante zu ersetzen. In diesem Falle eines aktiven Transponders enthielte die Energieversorgungsbaugruppe 80 eine Einrichtung zur primären Energieversorgung der elektronischen Transponderschaltung, beispielsweise eine Batterie.

Vielmehr sind alle denkbaren Kombinationen von Schaltgeräten verschiedener Funktionalitäten mit erfindungsgemäßen Zusatzgeräten, sowie alle denkbaren bekannten Transpondertypen und Funksignalübertragungssysteme im Gegenstand der Erfindung mit umfasst, wobei auch mehr als zwei Transponder in einem Zusatzgerät angebracht sein können und die Weiterverarbeitung der Schaltzustandsdaten auf jede beliebige Weise erfolgen kann.

## Patentansprüche

1. Vorrichtung zur Schaltstellungssignalisierung eines Schaltgerätes, welche ein an das Schaltgerät ansetzbares Zusatzgerät (10, 110) umfasst, wobei über wenigstens eine Kupplungsvorrichtung in Abhängigkeit von der jeweiligen Schaltstellung des Schaltgerätes ein Schaltschloss (20, 66) zwischen wenigstens einer ersten und wenigstens einer zweiten Schaltposition hin- und her schaltbar ist, **dadurch gekennzeichnet,**
- **dass** das Zusatzgerät (10, 110) wenigstens einen funkauslesbaren Transponder (30, 70) und wenigstens eine Antenne (32, 60) aufweist, so dass dadurch Informationen von dem Transponder (30, 70) aus dem Inneren des Zusatzgerätes von einem Ort außerhalb des Zusatzgerätes aus drahtlos abfragbar sind,
- **dass** die wenigstens eine Antenne (32, 60) mit dem wenigstens einen Transponder (30, 70) durch wenigstens einen Strompfad (27, 64) verbunden ist, und
- **dass** der wenigstens eine Strompfad (27, 64) an wenigstens einer Kontaktstelle (28, 67) durch das Schaltschloss (20, 66) unterbrechbar ist.

2. Vorrichtung nach Anspruch 1, **dadurch gekennzeichnet,**
- **dass** das Zusatzgerät (10, 110) einen ersten und einen zweiten funkauslesbaren Transponder (30, 31, 70, 71) und eine Antenne (32, 90) aufweist, so daß dadurch Informationen von dem ersten und/oder zweiten Transponder (30, 31, 70, 71) aus dem Inneren des Zusatzgerätes von einem Ort außerhalb des Zusatzgerätes aus drahtlos abfragbar sind,
- **dass** die Antenne (90) mit dem ersten Transponder (70) durch einen ersten Strompfad (62) und mit dem zweiten Transponder (71) durch einen zweiten Strompfad (63) verbunden ist, und
- **dass** der erste Strompfad (62) an einer ersten Kontaktstelle (67) und der zweite Strompfad (63) an einer zweiten Kontaktstelle (68) durch das Schaltschloss unterbrechbar sind.

3. Vorrichtung nach Anspruch 2, **dadurch gekennzeichnet, dass** in der ersten (zweiten) Schaltposition des Schaltschlosses (66) der erste (zweite) Kontakt an der ersten (zweiten) Kontaktstelle unterbrochen und der zweite (erste) Kontakt an der zweiten (ersten) Kontaktstelle geschlossen ist.

4. Vorrichtung nach Anspruch 3, **dadurch gekennzeichnet, dass** der Transponder oder die Transponder (30, 31, 70, 71) ein aktiver funkauslesbarer Transponder ist oder aktive funkauslesbare Transponder sind.

5. Vorrichtung nach Anspruch 4, **dadurch gekennzeichnet, dass** der Transponder eine elektronische Schaltung umfasst
- mit wenigstens einem lesbaren Speicher zur Speicherung von Daten (83),
- mit wenigstens einer Signal- und/oder Datenübertragungsbaugruppe (81) sowie
- mit wenigstens einer Energieversorgungsbaugruppe (80).

6. Vorrichtung nach Anspruch 3, **dadurch gekennzeichnet, dass** der Transponder oder die Transponder (30, 31, 70, 71) ein passiver funkauslesbarer Transponder ist oder passive funkauslesbare Transponder sind, so dass die Vorrichtung keine eigene Energieversorgung für den Transponder umfasst, vielmehr der Transponder aus einem von außen eingestrahlten Abfragesignal die Energie zur Signalübertragung bezieht.

7. Vorrichtung nach Anspruch 6, **dadurch gekennzeichnet, dass** der Transponder eine elektronische Schaltung umfasst
- mit wenigstens einem lesbaren Speicher zur Speicherung von Daten (83),
- mit wenigstens einer Signal- und/oder Datenübertragungsbaugruppe (81) sowie
- mit wenigstens einer Baugruppe (80) zur Energieerzeugung der für den Transponder benötigten Energie aus einem von außen eingestrahlten und von der Antenne empfangenen und an den Transponder über den Strompfad weitergeleiteten elektromagnetischen Signal.

8. Vorrichtung nach Anspruch 7, **dadurch gekennzeichnet, dass** der lesbare Speicher (83) ein Nur-Lese-Speicher (ROM), ein Schreib/Lesespeicher (RAM) oder ein EEPROM ist.

9. Vorrichtung nach Anspruch 7, **dadurch gekennzeichnet, dass** die elektronische Schaltung eine Mikroprozessor - oder Mikrocontrollerbaugruppe (82) umfasst.

10. Vorrichtung nach einem der vorherigen Ansprüche, **dadurch gekennzeichnet, dass** die Signal- und/oder Datenübertragungsbaugruppe (81) eine Baugruppe mit einem darin verwendeten international genormten Übertragungsprotokoll, wie z.B. eine Blootooth- Baugruppe, ist.

11. Vorrichtung nach Anspruch 6, **dadurch gekennzeichnet, dass** der Transponder ein akustisches Oberflächenwellenbauelement ist.

12. System (100) zur Schaltstellungssignalisierung eines Schaltgerätes oder mehrerer Schaltgeräte, welches umfasst
- wenigstens ein Schaltgerät mit wenigstens einer daran angesetzten Vorrichtung (110) gemäß einem der Ansprüche 1 bis 11, sowie
- wenigstens eine Signalabfrageeinheit (50) zur drahtlosen Abfrage der Informationen von dem oder den Transpondern (70, 71) aus dem wenigstens einen Zusatzgerät der Vorrichtung (110).

13. System nach Anspruch 12, **dadurch gekennzeichnet, dass** die Signalabfrageeinheit (50) eine Antenne (52) sowie eine Sende/Empfangseinheit (51) zur Erzeugung eines Abfragesignals und zum drahtlosen Empfang des von dem Transponder abgestrahlten Signals oder der von den Transpondern abgestrahlten Signale umfasst.

14. System nach Anspruch 13, **dadurch gekennzeichnet, dass** das Abfragesignal und das von dem Transponder abgestrahlte Signal aus hochfrequenten elektromagnetischen Wellen besteht.

15. System nach einem der vorhergehenden Ansprüche, **dadurch gekennzeichnet, dass** mehr als ein Transponder vorgesehen sind und die einzelnen Transponder unterscheidbar und einzeln adressierbar sind.

16. System nach Anspruch 15, **dadurch gekennzeichnet, daß** die Signalabfrageeinheit mit einer zentralen Steuer- und Regeleinheit (90) verbunden ist und die Signale von dem Transponder oder den Transpondern in der Steuer- und Regeleinheit weiterverarbeitet werden.

17. System nach einem der Ansprüche 12 bis 16, **dadurch gekennzeichnet, dass** das System als Teil eines Installationsbus-Systems vorgesehen ist, so dass das System die Informationen über die Schaltstellung des Schaltgerätes oder der Schaltgeräte dem Installationsbussystem zur weiteren Verarbeitung zur Verfügung stellt.

18. Verfahren zur Schaltstellungssignalisierung eines Schaltgerätes bei einem Schaltgerät gemäß Anspruch 1 bis 11 und einem System gemäß Anspruch 12 bis 17, **dadurch gekennzeichnet,**
- **dass** in einer ersten Schaltstellung des Schaltgerätes durch das Schaltschloss (66) in dem Zusatzgerät der Vorrichtung (110) der wenigstens eine Strompfad zwischen dem wenigstens einen Transponder und der wenigstens einen Antenne unterbrochen wird,
- **dass** in einer zweiten Schaltstellung des Schaltgerätes durch das Schaltschloss (66) in dem Zusatzgerät der Vorrichtung (110) der wenigstens eine Strompfad zwischen dem wenigstens einen Transponder und der wenigstens einen Antenne geschlossen wird,
so dass nur im Falle des geschlossenen Strompfades ein Signal von dem Transponder zu der Signalabfrageeinheit (51) übertragen und dadurch die zweite Schaltstellung des Schaltgerätes angezeigt wird, und im Falle des unterbrochenen Strompfades kein Signal von dem Transponder zu der Signalabfrageeinheit (51) übertragen und dadurch die erste Schaltstellung des Schaltgerätes angezeigt wird.

19. Verfahren nach Anspruch 17, **dadurch gekennzeichnet, dass** in einer ersten (zweiten) Schaltstellung des Schaltgerätes durch das Schaltschloss in dem Zusatzgerät der erste (zweite) Strompfad zwischen dem ersten (zweiten) Transponder und der Antenne unterbrochen ist und der zweite (erste) Strompfad zwischen dem zweiten (ersten) Transponder und der Antenne geschlossen ist, so dass in der ersten (zweiten) Schaltstellung des Schaltgerätes ein Signal von dem zweiten (ersten) Transponder zu der Signalabfrageeinheit übertragen wird, nicht aber von dem ersten (zweiten) Transponder, und dadurch die erste (zweite) Schaltstellung des Schaltgerätes angezeigt wird.

20. Verfahren nach Anspruch 19, **dadurch gekennzeichnet, dass** bei mehr als einem Transponder die einzelnen Transponder von der Signalabfrageeinheit unterschieden werden und/oder verschiedene Transponder von der Signalabfrageeinheit unterschiedlich adressiert werden.

21. Verfahren nach Anspruch 20, **dadurch gekennzeichnet, dass** die Informationen über die Schaltstellung des Schaltgerätes oder der Schaltgeräte von der Signalabfrageeinheit an eine zentrale Steuer- und Regeleinheit weitergeleitet werden, so dass die Informationen zu weiteren Kontroll- und/oder Weiterverarbeitungszwecken genutzt werden können.

22. Verfahren nach Anspruch 21, **dadurch gekennzeichnet, dass** die Informationen über die Schaltstellung des Schaltgerätes oder der Schaltgeräte von der Signalabfrageeinheit an ein übergeordnetes Installationsbussystem weitergeleitet werden, so dass die Informationen über das Bussystem zu weiteren Kontroll- und/oder Weiterverarbeitungszwecken genutzt werden können.
